# EUROPEAN PATENT SPECIFICATION

(11) **EP 2 425 619 B1**
(45) Date of publication and mention of the grant of the patent: **21.01.2015**
(21) Application number: 10770000.7
(22) Date of filing: 28.04.2010
(51) Int. Cl.: H04L 12/18, H04L 29/06, H04N 21/422

(54) **METHOD AND DEVICE FOR ESTABLISHING SIMULTANEOUS INCOMING CIRCUIT SWITCHED CALLS**
VERFAHREN UND VORRICHTUNG ZUR HERSTELLUNG SIMULTANER EINGEHENDER LEITUNGSVERMITTELTER ANRUFE
PROCÉDÉ ET DISPOSITIF D'ÉTABLISSEMENT D'APPELS ENTRANTS SIMULTANÉS À COMMUTATION DE CIRCUIT

(30) Priority: 29.04.2009 US 173819 P; 24.06.2009 NO 20092408
(43) Date of publication of application: 07.03.2012
(73) Proprietor: Cisco Systems International Sarl, 1180 Rolle (CH)
(72) Inventor: EDET, Nicolas, London Greater London W7 2NX (GB)
(74) Representative: Kazi, Ilya
(86) International application number: PCT/NO2010/000155
(87) International publication number: WO 2010/126379

(56) References cited:
- US-A1- 2004 114 031
- US-A1- 2004 114 031
- US-A1- 2004 114 625

## Description

### Field of the invention

The present invention relates to video calls, in particular to an ISDN device capable of handling multiple video calls and a method for same.

### Background of the invention

Conventional videoconferencing systems comprise a number of end-points communicating real-time video, audio and/or data streams over packet switched networks (e.g. WAN, LAN), and/or circuit switched networks (e.g. ISDN). The end-points include one or more monitor(s), camera(s), microphone(s) and/or data capture device(s) and a codec, which encodes and decodes outgoing and incoming streams, respectively. Different protocols are used for transmission of voice and data for different network technologies, e.g. H.320 for circuit switched networks and H.323 for packet switched networks. When a videoconference involves participants using different network technologies they have to make the video conferencing calls through a gateway (e.g. an H.320/H.323 gateway), which performs the task of "translating" between the different protocols (e.g. H.320 and H.323).

The H.320 standard from the International Telecommunications Union (ITU) is a common standard for multimedia communications over circuit switched networks like ISDN. H.320 is an umbrella standard with several sub standards defining the different protocol layers. An example is H.221. H.221 is the framing protocol of H.320. Video calls require more bandwidth than a single ISDN channel, in the following referred to as a channel, can provide, thus several channels are set up to make a combined higher bandwidth communication link. The channels making up such a communication link are conventionally called Master Call and Sub-calls. The Master Call is the first channel to be established, while the Sub-Calls are the subsequent channels to be established. The Master Call and the Sub-calls are all dialled independently of each other from the calling endpoint to the called endpoint. The H.221 Aggregation protocol defines directly sending H.221 frames in each channel. These frames providing a Sub-Call identifier (channel number, n) for each channel, working well in a point-to-point video call. However, if a receiving endpoint receives video calls from several transmitting endpoints it is not possible to identify which sub-calls belonging to which connection. As the receiving endpoint cannot reliably recreate the communication links, the receiving end will drop sub-calls or entire connections altogether.

One possible solution would be for the receiving endpoint to only accept one incoming connection at a time. The endpoint would need to immediately drop channels with a Sub-call Identifier n=1 (indicating a new Master Call) until all the Sub-calls have been established for the current incoming connection. This would obviously provide a poor user experience, forcing callers to dial again until their connection gets accepted.

Another possible solution would be using the Calling Number information sometimes available from the call control layer (Q.931), and consider all ISDN channels with identical Calling Numbers being part of the same connection. However the provision of this information relies on optional supplementary services (CLIP) which may not be available, this information could be hidden (CLIR), and networks may modify or strip this information. Besides, different connections could have identical Calling Numbers (e.g. multiple connections from a Gateway to another Gateway), or Calling Numbers within one connection could be different (e.g. ISDN channels spanning different PRIs).

Yet another possible solution is the BONDING protocol, of the BONDING consortium solving the problem by sending a Connection Identifier (the Group ID) as well as a Sub-call Identifier (the Channel ID), in-band, within each ISDN channel. The Connection Identifiers are allocated by the receiving endpoint, and kept unique across all incoming connections. Each calling endpoint transmits its own Connection Identifier within each of its Sub-calls, to allow the receiving endpoint to identify which ISDN channels are used by remote endpoints. The Sub-call Identifiers, all different within a given connection, are used by the receiving endpoint to reorder the ISDN channels. This technique therefore provides an ISDN endpoint (capable of handling multiple connections), or an ISDN Gateway, the ability to receive simultaneous incoming BONDING connections.

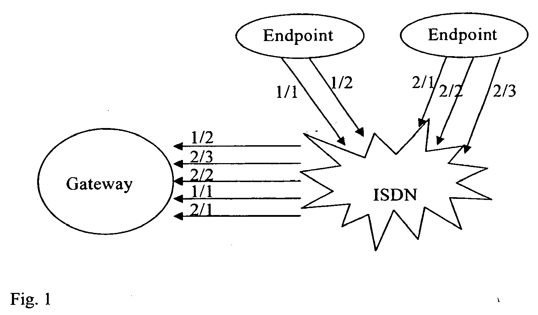

Fig. 1 illustrates two remote endpoints A and B, calling a Gateway across an ISDN network. The first digit represents the Connection Identifier, and the second digit represents the Sub-call Identifier sent within each ISDN channel.

The BONDING protocol may however not be supported by older endpoints.

The BONDING protocol requires all the channels part of a connection to be synchronized before media can be conveyed. However, the H.221 Aggregation protocol allows media to be conveyed while new ISDN channels are still being added to a connection, thus there is a significant interest in establishing simultaneous incoming connections as soon as possible, then adding more channels as necessary to these connections to gradually improve media quality. The present invention allows a faster, more reliable call setup, avoiding either rejecting calls or failing to establish calls successfully.

US 2004/114031 discloses a method and apparatus for simultaneous incoming digital call processing unit using ISDN bonding channels.

### Summary of the invention

The features defined in the independent claims enclosed characterize this arrangement and method.

In particular, the present invention discloses a method, allowing an ISDN endpoint or gateway to establish simultaneous incoming connections by controlling the order in which remote endpoints send framing on each sub-call. By delaying transmitting framing on certain sub-calls, the endpoint receiving the calls can ensure that only one remote endpoint starts transmitting framing with a new Sub-Call ID at any time, thus forcing endpoints to start transmitting framing in a known sequential order allowing the receiving endpoint to keep track on to which connection a given sub-call belongs.

### Brief description of the drawings

In order to make the invention more readily understandable, the discussion that follows will refer to the accompanying drawings,
Figure 1 shows an embodiment of prior art using the BONDING protocol,
Figure 2 is an exemplary flow sheet of a method according to the present invention,
Figure 3 shows an exemplary establishment of simultaneous calls according to the present invention.

### Best modes of carrying out the invention

In the following, the present invention will be discussed by describing a preferred embodiment, and by referring to the accompanying drawings. However, people skilled in the art will realize other applications and modifications within the scope of the invention as defined in the enclosed independent claims.

In the following detailed description of the method according the present invention, an ISDN endpoint or gateway implementing the method, will be denoted a gateway, while any ISDN endpoint or gateway making a call to the device implementing the method will be denoted an endpoint.

According to the present invention, an ISDN endpoint or gateway establishes simultaneous incoming connections by controlling the order in which remote endpoints send framing on each sub-call. By delaying transmitting framing on certain sub-calls, the endpoint receiving the calls can ensure that only one remote endpoint starts transmitting framing with a new Sub-Call ID at any time, thus forcing endpoints to start transmitting framing in a known sequential order allowing the receiving endpoint to keep track on to which connection a given sub-call belongs.

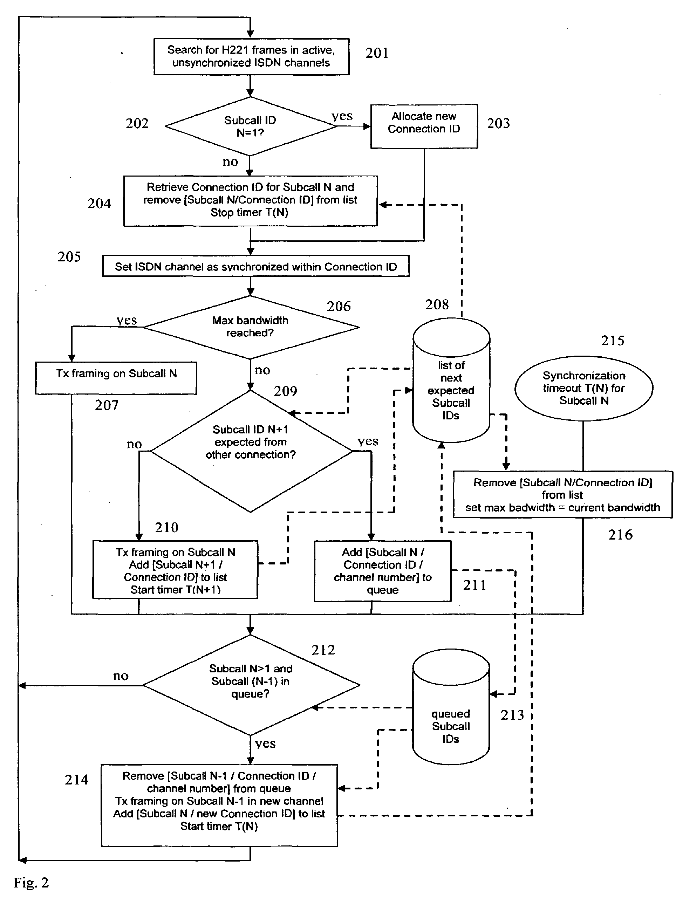

Endpoints transmit framing on Sub-call ID (n+1) on receiving framing on sub-call n from the gateway. Thus the gateway can keep a list of expected Sub-call IDs to be received next, knowing that transmitting framing on Sub-call ID (n) to a certain endpoint will trigger the endpoint to start transmitting framing on the next Sub-call ID (n+1) on a new ISDN channel. Once framing on Sub-call ID (n+1) has been received from the expected endpoint, the gateway sets the new channel as being used by the endpoint, allowing another calling endpoint to transmit framing on Sub-call ID (n+1). This method will be described in further detail below with reference to Fig. 2.

The method starts with at least one remote endpoint setting up an H.320 call to the gateway using the appropriate control layers of the H.320 protocol, leading to at least one active ISDN channel. All incoming calls are answered immediately by the gateway to avoid no answer timeouts. Then, referring to Fig. 2, the gateway will search for H.221 frames transmitted from the at least one endpoint in the active channels (step 201). If in step 202 a received H.221 frame is found to have a Sub-call ID (n=1), indicating a master call, the method continues to step 203, otherwise the method continues to step 204.

In step 203 the gateway allocates internal resources to accept a new incoming connection. The internal resources include a unique Internal Connection Identifier defining the remote calling endpoint.

Then in step 205 the ISDN channel in which framing was found is set as being synchronized within the Connection ID. This channel is now considered part of the communication link between the gateway and the remote endpoint defined by the Connection ID.

In step 206, if a maximum bandwidth to the connection is known, the gateway determines whether or not the maximum bandwidth has been reached when the new channel is added to the connection. If the maximum bandwidth is reached the gateway starts transmitting framing on Sub-call ID (n) (step 207) and continues to step 212. This minimizes cases where framing is never received on certain sub-calls, which would delay sub-call establishment to other connections. However, if a maximum bandwidth to the connection is not known or has not yet been reached, the method continues to step 209.

In step 209, the gateway checks the list of next expected Sub-call IDs in the internal memory 208 to determine whether a sub-call having Sub-call ID (n+1) is already expected from another connection. If so, the gateway proceeds to step 211, wherein the current Sub-call ID (n), Internal Connection ID and ISDN channel number are added to a queue of Sub-call IDs stored in the internal memory 213 e.g. as [Sub-call ID (n)/Connection ID/channel number]. If a Sub-call ID (n+1) is not expected from another connection, the gateway starts transmitting framing on Sub-call ID (n) in the current channel, and stores the next expected Sub-call ID (n+1) along with this Connection ID in the list of next expected sub-calls in the internal memory 208 (step 210).

At this stage the gateway is either transmitting framing on Sub-call ID (n) for the current Connection ID, or has delayed transmitting framing and added [Sub-call ID (n) / Connection ID / channel number] in a queue. Then, if the current call is not a master-call, i.e. n>1, the gateway reads the queue of Sub-call IDs stored in the internal memory 213 to check whether a sub-call with Sub-call ID (n-1) exists in the queue (step 212). If so, the gateway retrieves the corresponding new Connection ID and new ISDN channel number and removes [Sub-call ID (n-1)/Connection ID/channel number] from the queue, starts transmitting framing on Sub-call ID (n-1) in the new channel, and stores the next expected Sub-call ID (n) along with the new Connection ID in the list of next expected sub-calls in the internal memory 208 (step 214). Thereafter, the gateway returns to searching for H.221 frames in step 201. If, however, no Sub-call ID (n-1) exists in the queue, or the current call is a master call, the gateway immediately returns to searching for H.221 frames in step 201.

The gateway waits to receive H.221 frames with a new Sub-call ID within a connection for a pre-defined period of time. If no new Sub-call ID is received after the pre-defined period of time, the gateway invokes the synchronization timeout procedure 215. The synchronization time for a Sub-call ID n is measured by a timer T(n), the timer being started in steps 210 and 214 and stopped in step 204.

The synchronization timeout procedure 215 is invoked for a Sub-call ID (n) when the gateway has waited for framing from that sub-call over a pre-defined period of time and timer T(n) expired. [Sub-call ID (n)/Connection ID] is removed from the list of next expected sub-calls in the internal memory 208, and the maximum bandwidth for that connection is set to the current bandwidth to ensure the remote endpoint doesn't initiate Sub-call ID (n) at a later stage (step 216). The method then continues to step 212.

Now, returning to step 204 and the case where the sub-call ID of a received H.221 frame does not indicate a master-call, i.e. the remote endpoint has received framing from the gateway on channel n≥1. In this case the gateway uses the Sub-call ID (n) to retrieve the connection ID from the list of expected sub-call IDs in the internal memory 208 and removes the entry [Sub-call ID (n)/Connection ID] from the list (step 204). Continuing on to step 205 the gateway continues this procedure until the gateway has transmitted framing on the number of channels received from the remote endpoints.

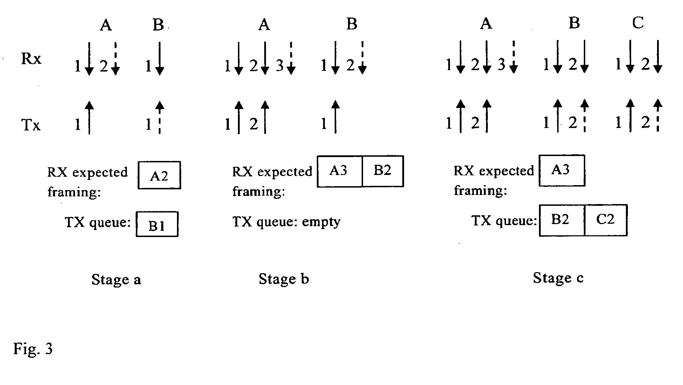

An exemplary establishment of a simultaneous call according to the present invention is shown in Fig. 3, wherein an ISDN GW receives simultaneous calls from three remote endpoints A, B and C. The 'Rx' solid arrows denote framing received by the gateway (along with the Sub-call identifiers) while the 'Rx' dashed arrows represent framing expected to be received next. The 'Tx' solid arrows denote framing transmitted by the gateway while the 'Tx' dashed arrows represent framing being queued, expected to be transmitted later on.

Endpoints A and B simultaneously initiate a new connection to the gateway. Framing on the two Master Calls is received at the gateway; the gateway starts transmitting framing on endpoint A's Master Call, so expects to receive framing next from A on Sub-call 2. However the GW can't transmit framing on the Master Call to B, since that would lead to B transmitting framing on Sub-call 2 at the same time as A, so adds B1 to its transmit (Tx) queue (stage A).

In stage B the gateway has received framing on Sub-call 2 from A, the gateway then starts transmitting framing on Sub-call 2 and expects receiving framing on Sub-call 3. The gateway also checks its queue to find that it can transmit framing on Sub-call 1 to B since no other connection currently expects to receive any Sub-call 2.

In stage C, the gateway has received framing on Sub-call 2 from B, and endpoint C is initiating a new connection. The gateway can transmit framing on the Master Call to C, but can't transmit framing on Sub-call 2 to neither B nor C until framing has been received (or a timeout occurs) on Sub-call 3 from A.

This procedure continues until the desired number of channels is connected to each endpoint.

Further disclosed is a video conferencing device adapted to perform the method described above with reference to Figure 2, the video conferencing device comprising at least one receiver adapted to receive multiple connections on a circuit switched network, at least one transmitter adapted to transmit on multiple connections on circuit switched network, at least one processing device and at least one memory device.

In an alternative embodiment the video conferencing device adapted to perform the method described above with reference to Figure 2, is a gateway thus also comprising least at one receiver adapted to receive at least one connection on a packet switched network, at least one transmitter adapted to transmit on at least one connections on the packet switched network, and a processing device translating between the circuit switched network and the packet switched network.

Further disclosed is a computer program, or at least a computer program portion, which comprises processing instructions that causes a processing device in a video conferencing device to perform a method as described in the present disclosure. The computer program portion may be tangibly stored in a memory, such as a RAM, ROM, or Flash memory, or it may be stored in a computer-readable medium, such as a magnetic or optical disk. Alternatively, the computer program or computer program portion may be embodied as a propagated signal which carries information representing the processing instructions, e.g. a communication signal transferred between network elements in a local, regional or global computer network.

As readily understandable by a person skilled in the art with access to the teachings of this disclosure, several combinations and modifications of the present invention can be envisaged without leaving the scope of the present invention.

## Claims

1. A method allowing a video conferencing device (GW) in a circuit switched network to establish simultaneous incoming connections from at least two remote video conferencing devices (A, B, C), the video conference device receiving H.320 calls from the at least two remote video conferencing devices, where the conference device on a H.221 protocol layer receives at least one sub-call, the at least one sub-call having a sub-call ID, to determine the sub-call ID of the at least one sub-call,
**characterized in**:
if the sub-call ID identifies the at least one sub-call as a master sub-call ID(n), where n=1, then
mapping a connection ID with the remote video conferencing device transmitting the master sub-call;
adding connection ID to a queue of remote video conferencing devices from which to expect another sub-call; and
starting transmitting framing on the sub-call;
if the sub-call ID does not identify the at least one sub-call as a master sub-call ID(n), where n>1, then
retrieving the connection ID corresponding to the remote conferencing device;
checking the queue whether the sub-call ID is already expected on another connection ID, and
if the sub-call ID is already expected on another connection ID, adding the at least one sub-call to the queue of expected sub-calls, otherwise
starting transmitting framing on the at least one sub-call and removing the at least one sub-call from the queue of expected sub-calls.

2. The method according to claim 1, further comprising the steps of:
determining a maximum available bandwidth to a remote video conferencing device,
determining whether the maximum bandwidth has been reached when a new sub-call is added to a connection, and
if the maximum bandwidth has been reached, starting transmitting framing on the new sub-call, and
waiting for a new sub-call on a next connection ID in the queue.

3. The method according to claim 2, wherein the maximum available bandwidth is determined to have been reached when a synchronization timer (T(n)) expires.

4. Video conferencing device (GW) adapted to perform the method according to any one of the preceding claims,
**characterized in that** it comprises:
at least one receiver adapted to receive multiple connections on a circuit switched network,
at least one transmitter adapted to transmit on multiple connections on the circuit switched network,
at least one processing device, and
at least one memory (208, 213) device.

5. The video conferencing device according to claim 4, further comprising:
at least one receiver adapted to receive at least one connection on a packet switched network,
at least one transmitter adapted to transmit on at least one connection on the packet switched network, and
a processing device translating between the circuit switched network and the packet switched network.

6. Computer program, or at least a computer program portion,
**characterized in that** it comprises:
processing instructions that causes a processing device in a video conferencing device (GW) to perform a method as described in claims 1-3.

## Patentansprüche

1. Verfahren, das einer Videokonferenzvorrichtung (GW) in einem leitungsvermittelten Netzwerk ermöglicht, simultane eingehende Verbindungen von mindestens zwei entfernten Videokonferenzvorrichtungen (A, B, C) herzustellen, wobei die Videokonferenzvorrichtung H.320-Anrufe von den mindestens zwei entfernten Videokonferenzvorrichtungen empfängt, wobei die Konferenzvorrichtung auf einer H.221-Protokollschicht mindestens einen Sub-Anruf empfängt, wobei der mindestens eine Sub-Anruf eine Sub-Anruf-ID aufweist, um die Sub-Anruf-ID des mindestens einen Sub-Anrufs zu bestimmen, **gekennzeichnet durch**:
wenn die Sub-Anruf-ID den mindestens einen Sub-Anruf als Master-Sub-Anruf-ID (n) identifiziert, wobei n = 1, dann
Zuordnen einer Verbindungs-ID zu der entfernten Videokonferenzvorrichtung, die den Master-Sub-Anruf sendet;
Hinzufügen der Verbindungs-ID zu einer Warteschlange von entfernten Videokonferenzvorrichtungen, von denen ein weiterer Sub-Anruf erwartet wird; und
Beginnen mit der Übertragung der Rastereinstellung auf dem Sub-Anruf;
wenn die Sub-Anruf-ID den mindestens einen Sub-Anruf als Master-Sub-Anruf-ID (n) nicht identifiziert, wobei n > 1, dann
Abrufen der Verbindungs-ID, die der entfernten Konferenzvorrichtung entspricht;
Überprüfen der Warteschlange, ob die Sub-Anruf-ID bereits auf einer anderen Verbindungs-ID erwartet wird, und
wenn die Sub-Anruf-ID bereits auf einer anderen Verbindungs-ID erwartet wird, Hinzufügen des mindestens einen Sub-Anrufs zu der Warteschlange der erwarteten Sub-Anrufe, ansonsten
Beginnen mit der Übertragung der Rastereinstellung auf dem mindestens einen Sub-Anruf und Löschen des mindestens einen Sub-Anrufs aus der Warteschlange der erwarteten Sub-Anrufe.

2. Verfahren nach Anspruch 1, das ferner folgende Schritte umfasst:
Bestimmen einer maximal verfügbaren Bandbreite zu einer entfernten Videokonferenzvorrichtung,
Bestimmen, ob die maximale Bandbreite erreicht wurde, wenn ein neuer Sub-Anruf zu einer Verbindung hinzugefügt wird, und
wenn die maximale Bandbreite erreicht wurde, Beginnen mit der Übertragung der Rastereinstellung auf dem neuen Sub-Anruf und
Warten auf einen neuen Sub-Anruf auf einer nächsten Verbindungs-ID in der Warteschlange.

3. Verfahren nach Anspruch 2, wobei bestimmt wird, dass die maximal verfügbare Bandbreite erreicht ist, wenn ein Synchronisationszeitgeber (T(n)) abgelaufen ist.

4. Videokonferenzvorrichtung (GW), die dafür ausgelegt ist, das Verfahren nach einem der vorhergehenden Ansprüche durchzuführen,
**dadurch gekennzeichnet, dass** sie Folgendes umfasst:
mindestens einen Empfänger für den Empfang mehrerer Verbindungen in einem leitungsvermittelten Netzwerk,
mindestens einen Sender zum Senden mehrerer Verbindungen in dem leitungsvermittelten Netzwerk,
mindestens eine Verarbeitungsvorrichtung und
mindestens eine Speichervorrichtung (208, 213).

5. Videokonferenzvorrichtung nach Anspruch 4, die ferner Folgendes umfasst:
mindestens einen Empfänger für den Empfang mindestens einer Verbindung in einem paketvermittelten Netzwerk,
mindestens einen Sender zum Senden mindestens einer Verbindung in dem paketvermittelten Netzwerk und
eine Verarbeitungsvorrichtung, die zwischen dem leitungsvermittelten Netzwerk und dem paketvermittelten Netzwerk übersetzt.

6. Computerprogramm, oder mindestens ein Computerprogrammabschnitt , **dadurch gekennzeichnet, dass** es bzw. er Folgendes umfasst:
Verarbeitungsanweisungen, die eine Verarbeitungsvorrichtung in einer Videokonferenzvorrichtung (GW) veranlassen, ein Verfahren nach Anspruch 1-3 durchzuführen.

## Revendications

1. Procédé permettant à un dispositif de vidéoconférence (GW) dans un réseau à commutation de circuits d'établir des connexions entrantes simultanées en provenance d'au moins deux dispositifs de vidéoconférence à distance (A, B, C), le dispositif de vidéoconférence recevant des appels H.320 en provenance desdits au moins deux dispositifs de vidéoconférence à distance, dans lequel le dispositif de vidéoconférence sur une couche de protocole H.221 reçoit au moins un sous-appel, ledit au moins un sous-appel ayant une ID de sous-appel, pour déterminer l'ID de sous-appel dudit au moins un sous-appel,
**caractérisé par** :
si l'ID de sous-appel identifie ledit au moins un sous-appel comme étant un sous-appel maître ID(n), où n=1, alors
l'étape consistant à établir une correspondance entre une ID de connexion et le dispositif de vidéoconférence à distance émettant le sous-appel maître ;
l'étape consistant à ajouter une ID de connexion à une file d'attente de dispositifs de vidéoconférence à distance en provenance desquels un autre sous-appel est anticipé ; et
l'étape consistant à commencer à émettre un verrouillage de trame sur le sous-appel ;
si l'ID de sous-appel n'identifie pas ledit au moins un sous-appel comme étant un sous-appel maître ID(n), où n>1, alors
l'étape consistant à récupérer l'ID de connexion correspondant au dispositif de vidéoconférence à distance ;
l'étape consistant à vérifier la file d'attente pour savoir si l'ID de sous-appel est déjà anticipée sur une autre ID de connexion, et
si l'ID de sous-appel est déjà anticipée sur une autre ID de connexion, l'étape consistant à ajouter ledit au moins un sous-appel à la file d'attente des sous-appels anticipés, sinon
l'étape consistant à commencer à émettre un verrouillage de trame sur ledit au moins un sous-appel et l'étape consistant à supprimer ledit au moins un sous-appel de la file d'attente des sous-appels anticipés.

2. Procédé selon la revendication 1, comportant par ailleurs les étapes consistant à :
déterminer une bande passante disponible maximale au niveau d'un dispositif de vidéoconférence à distance,
déterminer si la bande passante maximale a été atteinte quand un nouveau sous-appel est ajouté à une connexion, et
si la bande passante maximale a été atteinte, commencer à émettre un verrouillage de trame sur le nouveau sous-appel, et
attendre un nouveau sous-appel sur une prochaine ID de connexion dans la file d'attente.

3. Procédé selon la revendication 2, dans lequel la bande passante disponible maximale est déterminée comme ayant été atteinte lors de l'expiration d'une temporisation de synchronisation (T(n)).

4. Dispositif de vidéoconférence (GW) adapté pour effectuer le procédé selon l'une quelconque des revendications précédentes,
**caractérisé en ce qu'**il comporte :
au moins un récepteur adapté pour recevoir de multiples connexions sur un réseau à commutation de circuits,
au moins un émetteur adapté pour émettre de multiples connexions sur le réseau à commutation de circuits,
au moins un dispositif de traitement, et
au moins un dispositif de mémoire (208, 213).

5. Dispositif de vidéoconférence selon la revendication 4, comportant par ailleurs :
au moins un récepteur adapté pour recevoir au moins une connexion sur un réseau à commutation de paquets,
au moins un émetteur adapté pour émettre au moins une connexion sur le réseau à commutation de paquets, et
un dispositif de traitement translatant entre le réseau à commutation de circuits et le réseau à commutation de paquets.

6. Programme informatique, ou au moins partie de programme informatique,
**caractérisé en ce qu'**il comporte :
le traitement d'instructions qui amène un dispositif de traitement dans un dispositif de vidéoconférence (GW) à effectuer un procédé selon les revendications 1 à 3.
